# EUROPÄISCHE PATENTSCHRIFT

(11) **EP 3 774 424 B1**
(45) Veröffentlichungstag und Bekanntmachung des Hinweises auf die Patenterteilung: **27.11.2024**
(21) Anmeldenummer: 19711291.5
(22) Anmeldetag: 12.03.2019
(51) Int. Cl.: F16D 21/08, B60K 6/387, B60K 6/40, B60K 6/48, B60W 10/02, F16D 25/0638

(54) **HYBRIDANTRIEBSMODUL FÜR EIN KRAFTFAHRZEUG**
HYBRID DRIVE MODULE FOR A MOTOR VEHICLE
MODULE D'ENTRAÎNEMENT HYBRIDE POUR UN VÉHICULE AUTOMOBILE

(30) Priorität: 11.04.2018 DE 102018205463
(43) Veröffentlichungstag der Anmeldung: 17.02.2021
(73) Patentinhaber: ZF Friedrichshafen AG, 88046 Friedrichshafen (DE)
(72) Erfinder: RÖSSNER, Monika, 97499 Donnersdorf (DE); VIERNEKES, Gerald, 97437 Hassfurt (DE); KUNDERMANN, Wolfgang, 65599 Dornburg-Dorndorf (DE); GROSSPIETSCH, Wolfgang, 97422 Schweinfurt (DE); BREHMER, Martin, 88069 Tettnang (DE); RIEDISSER, Thomas, 88138 Sigmarszell (DE); SCHMIDT, Thilo, 88074 Meckenbeuren (DE)
(74) Vertreter: ZF Friedrichshafen AG
(86) Internationale Anmeldenummer: PCT/EP2019/056098
(87) Internationale Veröffentlichungsnummer: WO 2019/197104

(56) Entgegenhaltungen:
- DE-A1- 102009 022 275
- DE-A1- 102011 109 702
- DE-B4- 112012 000 391
- DE-B4- 112012 000 391
- DE-T5- 112009 001 077
- DE-T5- 112009 001 077
- DE-T5- 112012 000 391
- US-A1- 2014 128 219

## Beschreibung

Die Erfindung betrifft ein Hybridantriebsmodul für ein Kraftfahrzeug. Das Hybridantriebsmodul kann integraler Bestandteil eines Kraftfahrzeug-Getriebes sein,
oder als eigenständige Einheit mit zumindest einer Schnittstelle zu einem Kraftfahrzeug-Getriebe ausgebildet sein. Die Erfindung betrifft ferner einen Antriebsstrang für ein Kraftfahrzeug mit einem solchen Hybridantriebsmodul.

Die Patentanmeldung DE 10 2009 020 672 A1 beschreibt eine Kraftübertragungs- und Antriebseinheit für den Einsatz in einem Hybridsystem, und weist eine elektrische Maschine, eine Kupplungseinrichtung zur Trennung eines Kraftflusses zwischen einer Arbeitsmaschine und dem Rotor der elektrischen Maschine, einen mit dem Rotor verbundenen Drehmomentwandler, und einer Einrichtung zur zumindest teilweisen Umgehung des hydrodynamischen Leistungszweiges des Drehmomentwandlers auf. Es sind verschiedene Ausgestaltungen des Drehmomentwandlers und der Betätigung der Umgehungseinrichtung beschrieben, insbesondere eine Zweikanal-Ausführung und eine Dreikanal-Ausführung. Bei einer Zweikanal-Ausführung ist im Gegensatz zu einer Dreikanal-Ausführung kein gesonderter Druckraum zur Betätigung der Umgehungseinrichtung vorhanden. Eine konkrete konstruktive Ausgestaltung der Kraftübertragungs- und Antriebseinheit mit Dreikanal-Ausführung des Drehmomentwandlers ist jedoch nicht offenbart.

Die Patentanmeldung DE 10 2011 109 702 A1 beschreibt einen Drehmomentwandler mit einem einstückig ausgebildeten Gehäuseelement, welches einen Lamellenträger einer Wandlerüberbrückungskupplung und einen Lamellenträger einer Trennkupplung ausbildet. Zudem bildet das Gehäuseelement zusammen mit je einem Betätigungskolben jeweils eine Druckkammer zur Betätigung der Wandlerüberbrückungskupplung und der Trennkupplung. Sowohl die Wandlerüberbrückungskupplung als auch die Trennkupplung werden von dem einstückig ausgebildeten Gehäuseelement umschlossen. Die Offenbarung beschränkt sich auf Strichzeichnungen, eine konkrete konstruktive Ausgestaltung ist nicht beschrieben.

Die DE 11 2012 000 391 T5 beschreibt eine Fahrzeugantriebsvorrichtung mit einer elektrischen Maschine und mit einem Drehmomentwandler. Der Drehmomentwandler weist eine Eingriffsvorrichtung auf, welche dazu eingerichtet ist das Pumpenrad und den Turbinenläufer des Drehmomentwandlers miteinander zu verbinden. Ferner ist eine weitere Eingriffsvorrichtung vorgesehen, welche dazu eingerichtet ist einen Verbrennungsmotor mit der elektrischen Maschine zu verbinden. Ein Innenlamellenträger der weiteren Eingriffsvorrichtung ist axial zwischen einem Betätigungskolben derselben und einem Gehäuse des Drehmomentwandlers angeordnet.

Die DE 11 2009 001 077 T5 beschreibt eine Fahrzeugantriebsvorrichtung mit einem Elektromotor und einem Drehmomentwandler. Innerhalb eines Gehäuses des Drehmomentwandler sind eine Drehmomentwandler-Überbrückungskupplung und eine Maschinenleistungsunterbrechungskupplung angeordnet.

Die DE 10 2009 022 275 A1 beschreibt einen Antriebsstrang für ein Hybridsystem mit einer ersten Antriebsmaschine und einer zweiten Antriebsmaschine, welche über einen Drehmomentwandler mit einem Getriebe verbindbar sind. Zwischen der ersten Antriebsmaschine und dem Drehmomentwandler ist eine Kupplungseinrichtung vorgesehen, welche durch eine druckmittelbetätigte Stelleinrichtung betätigt wird. Ferner sind Mittel zur Übertragung eines vordefinierten Mindestmoments vorgesehen, welche vor dem Aufbau des erforderlichen Betätigungsdrucks der Stelleinrichtung wirken.

Es ist nun Aufgabe der Erfindung, die im Stand der Technik bekannten Konstruktionen weiterzubilden, um ein Hybridantriebsmodul mit einem möglichst kostengünstigen und kompakten Aufbau bereitzustellen.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Es wird ein Hybridantriebsmodul für ein Kraftfahrzeug vorgeschlagen, welches eine Eingangswelle, eine elektrische Maschine mit einem drehfesten Stator und einem drehbaren Rotor, eine Trennkupplung im Kraftfluss zwischen der Eingangswelle und dem Rotor sowie einen Drehmomentwandler aufweist, dessen Gehäuse mit dem Rotor drehfest verbunden ist. Der Drehmomentwandler weist eine innerhalb seines Gehäuses angeordnete Überbrückungskupplung auf, welche dazu eingerichtet den hydrodynamischen Pfad des Drehmomentwandlers zu überbrücken, also Pumpenrad und Turbinenrad des Drehmomentwandlers mechanisch zu verbinden.

Die Trennkupplung wird durch Druckbeaufschlagung eines ersten Druckraums über einen ersten Kolben in Schließrichtung betätigt. Der erste Druckraum befindet sich im Gegensatz zur Ausgestaltung gemäß DE 10 2011 109 702 A1 außerhalb des Drehmomentwandler-Gehäuses. Die Überbrückungskupplung wird durch Druckbeaufschlagung eines zweiten Druckraums über einen zweiten Kolben in Schließrichtung betätigt. Der zweite Druckraum ist ausschließlich zur Betätigung der Überbrückungskupplung vorgesehen, und ist innerhalb des Drehmomentwandler-Gehäuses angeordnet. In anderen Worten kommt bei dem Hybridantriebsmodul gemäß der vorliegenden Erfindung ein Drehmomentwandler mit zumindest drei Anschlussleitungen zum Einsatz. Die zumindest drei Anschlussleitungen gliedern sich wie folgt: ein Öleinlasskanal für den Torusraum des Drehmomentwandlers, ein Ölauslasskanal für den Torusraum des Drehmomentwandlers, und ein Ölkanal zur Druckversorgung des zweiten Druckraums. Optional kann eine vierte Anschlussleitung zur Versorgung eines eigenen Druckausgleichsraums der Überbrückungskupplung vorgesehen sein.

Erfindungsgemäß ist nun vorgesehen, dass sowohl der erste Druckraum als auch der zweite Druckraum zumindest abschnittsweise durch das Gehäuse des Drehmomentwandlers begrenzt sind. Während dies für den ersten Druckraum bei der Lösung gemäß DE 10 2009 020 672 A1 zweifellos der Fall ist, geht eine derartige Anordnung des zweiten Druckraums nicht unmittelbar und eindeutig aus Fig. 5 der vorgenannten Druckschrift hervor. Das Drehmomentwandler-Gehäuse trennt den ersten Druckraum dabei unmittelbar vom zweiten Druckraum ab. In anderen Worten bildet ein Abschnitt des Drehmomentwandler-Gehäuses sowohl eine Begrenzung des ersten Druckraums als auch eine Begrenzung des zweiten Druckraums. Eine derartige Ausbildung der beiden Druckräume nutzt bestehende, ohnehin vorhandene Bauteile, sodass die Teilezahl des erfindungsgemäßen Hybridantriebsmoduls gering gehalten werden kann.

Dem ersten Druckraum ist ein erster Kolben zur Betätigung der Trennkupplung zugeordnet. In gleicher Weise ist dem zweiten Druckraum ein Kolben zur Betätigung der Überbrückungskupplung zugeordnet. Die wirksame Fläche des ersten Kolbens ist kleiner als die wirksame Fläche des zweiten Kolbens. Dies ist insbesondere bei Verwendung bei einem Drehmomentwandler in Dreikanal-Ausführung vorteilhaft, da der zweite Druckraum gegen den im Torusraum des Drehmomentwandlers vorliegenden Druck wirkt. Der erste Druckraum wirkt üblicherweise gegen einen im Verhältnis geringeren Schmierdruck.

Der erste Druckraum und der zweite Druckraum sind zumindest abschnittsweise radial übereinander angeordnet. In anderen Worten sind die beiden Druckräume radial geschachtelt angeordnet. Die dadurch erforderliche Geometrie des Drehmomentwandler-Gehäuses ist steifer als eine gerade Gehäusewand, sodass der Betätigungsdruck für die Trennkupplung, bzw. für die Überbrückungskupplung in geringerem Maße zu einer Verformung des Drehmomentwandler-Gehäuses führt. Der zweite Kolben umgreift dabei den ersten Druckraum zumindest abschnittsweise. In anderen Worten sind Abschnitte des zweiten Kolbens sowohl radial außerhalb als auch radial innerhalb des ersten Druckraums angeordnet.

Gemäß einer bevorzugten Ausgestaltung weist das Drehmomentwandler-Gehäuse einen Hinterschnitt auf, also einen Bereich mit axial verringerten Abmessungen im Verhältnis zur gesamten Baulänge des Drehmomentwandler-Gehäuses. Dieser Hinterschnitt ist zur Führung des ersten Kolbens eingerichtet. Der Hinterschnitt muss den ersten Kolben nicht alleine führen; vielmehr können auch andere Flächen zur Führung des ersten Kolbens vorgesehen sein. Eine derartige Ausbildung nutzt ein bestehendes, ohnehin vorhandenes Bauteil zur Führung des ersten Kolbens, sodass die Teilezahl des erfindungsgemäßen Hybridantriebsmoduls gering gehalten werden kann.

Vorzugsweise ist das Gehäuse des Drehmomentwandlers mit einer Nabe drehfest verbunden. Die Nabe dient vorzugsweise zur drehbaren Abstützung des Drehmomentwandlers und ist beispielsweise als Drehteil ausgeführt, während das Drehmomentwandler-Gehäuse üblicherweise eine Blechkonstruktion bildet. Die Nabe weist vorzugsweise zumindest einen Fluidkanal zur Fluidversorgung des ersten Druckraums auf. Der Fluidkanal kann beispielsweise als Bohrung ausgeführt sein. Vorzugsweise weist die Nabe zusätzlich einen zweiten Fluidkanal zur Fluidversorgung des zweiten Druckraums auf, oder begrenzt einen solchen zumindest abschnittsweise. Die Nabe ist daher an der Bildung der Fluidversorgung von zumindest einem der Druckräume beteiligt. Derartige Kanäle sind in einem Drehteil besonders einfach herstellbar, beispielsweise mittels Bohrungen. Daher eignet sich die Nabe besonders für diesen Zweck.

Gemäß einer bevorzugten Ausgestaltung sind sowohl die Trennkupplung als auch die Überbrückungskupplung als nasslaufende Lamellenkupplungen ausgebildet. Ein Außenlamellenträger der Trennkupplung ist dabei drehfest mit dem Drehmomentwandler-Gehäuse verbunden. Dies ermöglicht einen besonders kompakten Aufbau des Hybridantriebsmoduls. Vorzugsweise ist der Außenlamellenträger mit dem Drehmomentwandler- Gehäuse vernietet. Die Nietverbindung kann dabei innerhalb des ersten Druckraums angeordnet sein. Die Nietverbindung kann in einem Bereich des Drehmomentwandler- Gehäuses angeordnet sein, welcher den zweiten Druckraum begrenzt.

Vorzugsweise ist das Hybridantriebsmodul integraler Bestandteil eines Kraftfahrzeug-Getriebes. Das ein- oder mehrteilige Gehäuse des Hybridantriebsmoduls beherbergt dabei beispielsweise Planetenradsätze und Schaltelemente, mittels denen eine Mehrzahl von Gängen zwischen einer Antriebswelle und einer Abtriebswelle des Getriebes schaltbar sind. Anstelle der Planetenradsätze und Schaltelemente kann das Getriebe auch ein Reibradgetriebe mit verschiebbaren Rädern umfassen, mittels dem das Übersetzungsverhältnis zwischen Antriebswelle und Abtriebswelle stufenlos veränderbar ist. Das Getriebe kann auch als Einfach- oder Doppelkupplungsgetriebe ausgeführt sein, welches schaltbar Stirnradpaare zur Gangbildung nutzt.

Alternativ dazu kann das Hybridantriebsmodul als eine eigenständige Einheit mit einer Schnittstelle zu einem Kraftfahrzeug-Getriebe ausgebildet sein. Das Hybridantriebsmodul ist dabei von dem Getriebe lösbar.

Das Hybridantriebsmodul kann Bestandteil eines Antriebsstrangs eines Kraftfahrzeugs sein. Die elektrische Maschine des Hybridantriebsmoduls kann zum Antrieb des Kraftfahrzeugs und/oder zum Starten eines Verbrennungsmotors des Antriebsstrangs vorgesehen sein.

Ausführungsbeispiele sind nachfolgend anhand der beigefügten Figuren detailliert beschrieben. Es zeigen:
Fig. 1 und Fig. 2 je eine Schnittansicht verschiedener Ausführungsbeispiele eines Hybridantriebsmoduls;
Fig. 3 eine Schnittansicht eines erfindungsgemäßen Ausführungsbeispiels eines Hybridantriebsmoduls; sowie
Fig. 4 und Fig. 5 je einen Antriebsstrang für ein Kraftfahrzeug.

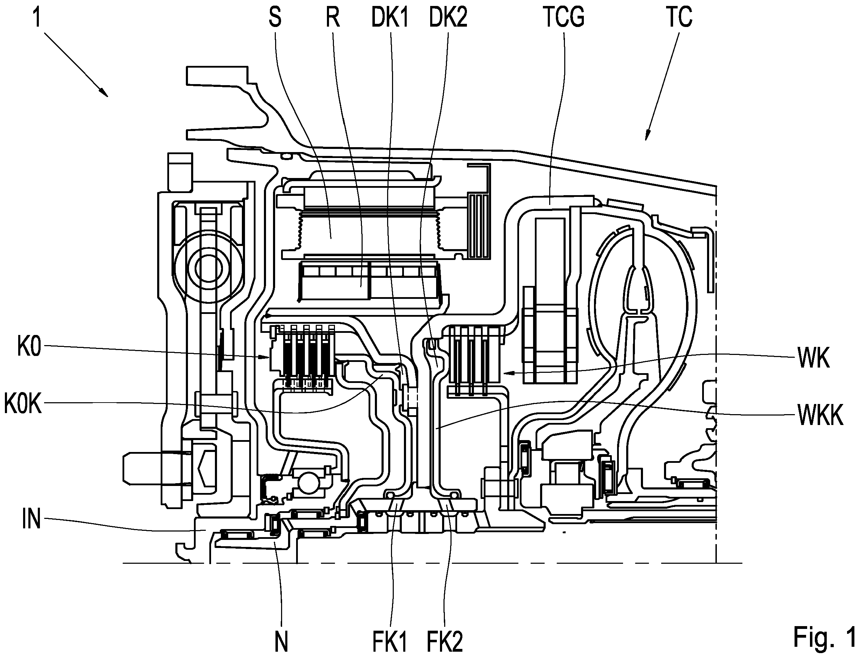

Fig. 1 zeigt eine Schnittdarstellung eines Hybridantriebsmoduls 1 gemäß einem ersten Ausführungsbeispiel. Das Hybridantriebsmodul 1 weist eine Eingangswelle IN, eine elektrische Maschine mit einem drehfesten Stator S sowie einem drehbaren Rotor R, eine Trennkupplung K0 in Form einer Lamellenkupplung sowie einen Drehmomentwandler TC auf. Durch Schließen der Trennkupplung K0 ist die Eingangswelle IN mit dem Rotor R verbindbar, welcher mit einem Gehäuse TCG des Drehmomentwandlers TC verbunden ist. Dazu ist die Eingangswelle IN mit einem Innenlamellenträger der Trennkupplung K0 verbunden, während der Rotor R mit einem Außenlamellenträger der Trennkupplung K0 verbunden ist. Der Drehmomentwandler TC weist eine innerhalb des Gehäuses TCG angeordnete Überbrückungskupplung WK auf, welche dazu eingerichtet ist Pumpenrad und Turbinenrad des Drehmomentwandlers TC miteinander zu verbinden, und so den hydrodynamischen Pfad des Drehmomentwandlers TC auf mechanischem Wege kurzzuschließen. Die Überbrückungskupplung WK ist als Lamellenkupplung ausgebildet.

Sowohl die Trennkupplung K0 als auch die Überbrückungskupplung WK sind hydraulisch betätigbar. Zur Betätigung der Trennkupplung K0 ist ein erster Druckraum DK1 vorgesehen, welcher außerhalb des Gehäuses TCG angeordnet ist. Wird der Druck im ersten Druckraum DK1 erhöht, so wird ein erster Kolben K0K gegen die Kraft einer in Fig. 1 nicht dargestellten Rückstellfeder in Richtung eines Lamellenpakets der Trennkupplung K0 verschoben. Die Trennkupplung K0 ist somit durch Druckbeaufschlagung des ersten Druckraums DK1 in Schließrichtung betätigbar. Auf der vom ersten Druckraum DK1 abgewandten Stirnseite des ersten Kolbens K0K ist ein Druckausgleichsraum vorgesehen, welcher in axialer Richtung durch eine Stauscheibe begrenzt ist.

Zur Betätigung der Überbrückungskupplung WK ist ein zweiter Druckraum DK2 vorgesehen, welcher innerhalb des Gehäuses TCG angeordnet ist. Wird der Druck im zweiten Druckraum DK2 erhöht, so wird ein zweiter Kolben WKK gegen die Kraft einer in Fig. 1 nicht dargestellten weiteren Rückstellfeder in Richtung eines Lamellenpakets der Überbrückungskupplung WK verschoben. Die Überbrückungskupplung WK ist somit durch Druckbeaufschlagung des zweiten Druckraums DK2 in Schließrichtung betätigbar. Auf der vom zweiten Druckraum DK2 abgewandten Stirnseite des zweiten Kolbens WKK ist kein eigener Druckausgleichsraum vorgesehen. Vielmehr wirkt der Druck im zweiten Druckraum DK2 gegen den im Torusraum des Drehmomentwandlers TC vorliegenden Druck. Die wirksame Fläche des zweiten Kolbens WKK ist dabei größer als die wirksame Fläche des ersten Kolbens K0K. Unter "wirksamer Fläche" wird dabei die Querschnittsfläche der Kolben K0K, WKK verstanden, auf die der Druck im jeweiligen Druckraum DK1, DK2 wirkt.

Der erste und der zweite Druckraum DK1, DK2 werden zumindest abschnittsweise durch das Gehäuse TCG begrenzt. In anderen Worten stützt sich der Druck in den Druckräumen DK1, DK2 unmittelbar am Gehäuse TCG ab. Das Gehäuse TCG trennt dabei den ersten Druckraum DK1 unmittelbar vom zweiten Druckraum DK2.

Das Gehäuse TCG ist mit einer Nabe N drehfest verbunden, beispielsweise mittels einer Schweißverbindung. Die Nabe N kann beispielsweise im spanenden Verfahren hergestellt sein, während das Gehäuse TCG üblicherweise durch Umformen hergestellt wird. Die Nabe N weist einen ersten Fluidkanal FK1 in Form einer Bohrung auf, welche zur Fluidversorgung des ersten Druckraums DK1 vorgesehen ist. Die Nabe N weist ferner einen zweien Fluidkanal FK2 auf, welcher zur Fluidversorgung des zweiten Druckraums DK2 vorgesehen ist.

Der Außenlamellenträger der Trennkupplung K0 ist mit dem Gehäuse TCG mittels einer Nietverbindung drehfest verbunden. Die Nietverbindung, bzw. der Nietkopf befindet sich dabei innerhalb des ersten Druckraums DK1.

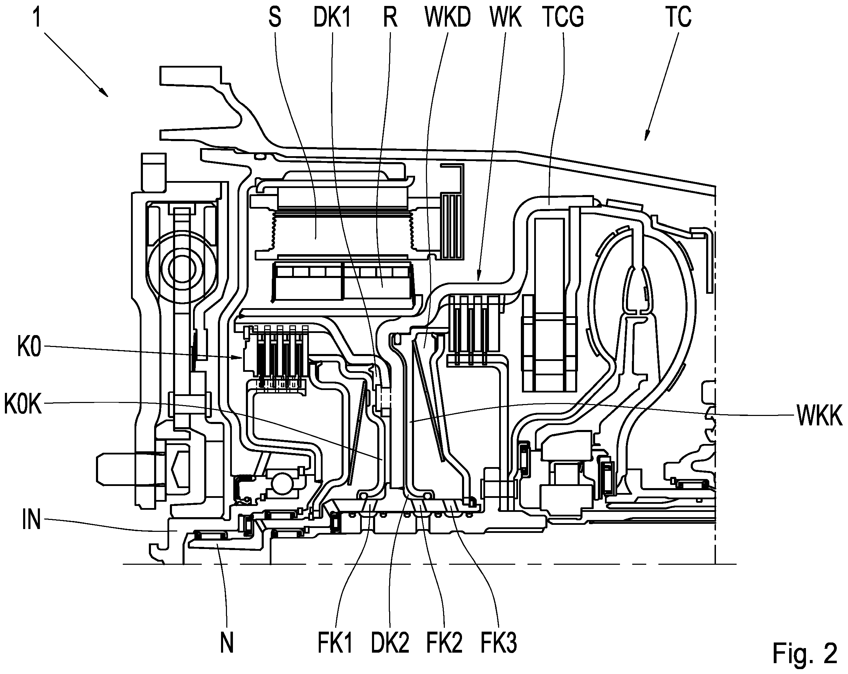

Fig. 2 zeigt eine Schnittdarstellung eines Hybridantriebsmoduls 1 gemäß einem zweiten Ausführungsbeispiel, welches im Wesentlichen dem in Fig. 1 dargestellten ersten Ausführungsbeispiel entspricht. Der Drehmomentwandler TC weist nun vier hydraulische Anschlüsse auf, sodass eine Fluidversorgung eines der Überbrückungskupplung WK zugeordneten Druckausgleichsraums möglich ist. Zur Versorgung dieses Druckausgleichsraums ist in der Nabe N ein dritter Fluidkanal FK3 vorgesehen.

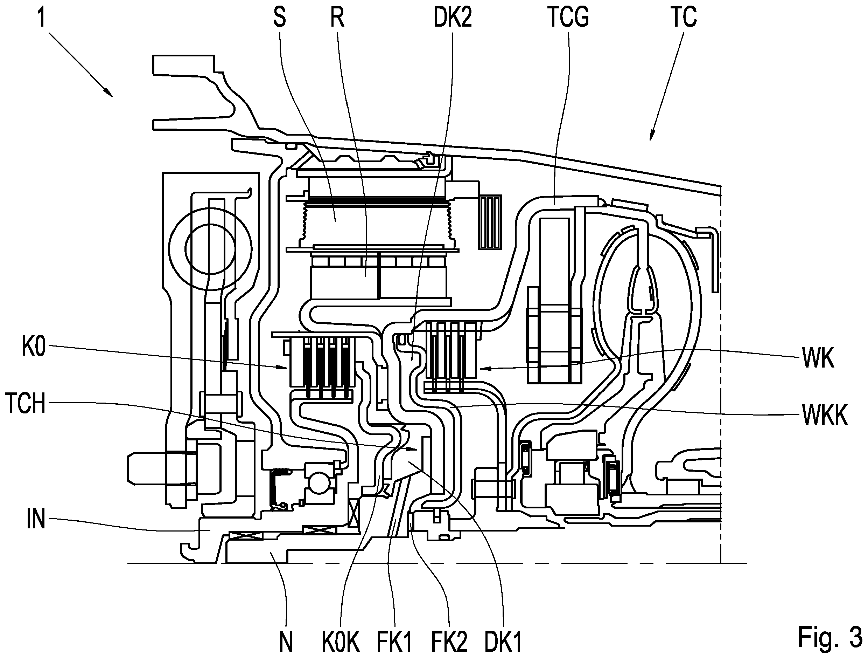

Fig. 3 zeigt eine Schnittdarstellung eines Hybridantriebsmoduls 1 gemäß einem dritten Ausführungsbeispiel. Im Gegensatz zu den anderen Ausführungsbeispielen weist das Gehäuse TCG im Bereich der Nabe N einen Hinterschnitt TCH auf. Die beiden Druckräume DK1, DK2 sind abschnittsweise radial übereinander angeordnet. In anderen Worten sind Abschnitte beider Druckräume DK1, DK2 in einer gemeinsamen Ebene angeordnet, welche rechtwinklig zur Drehachse des Verbunds aus Rotor R und Gehäuse TCG ist. Der zweite Kolben WKK umgreift dabei den ersten Druckraum DK1 in radialer Richtung. Durch diese Ausgestaltung werden sowohl das Gehäuse TCG als auch die beiden Kolben K0K, WKK versteift, sodass ein Druck in den Druckräumen DK1, DK2 in verringertem Maß zu einer Verformung des Gehäuses TCG, bzw. der Kolben K0K, WKK führt.

Der im dritten Ausführungsbeispiel des Hybridantriebsmoduls 1 verwendete Drehmomentwandler TC weist drei hydraulische Anschlüsse aus. Der Überbrückungskupplung WK ist somit kein eigener Druckausgleichsraum zugeordnet. Der Druck im zweiten Druckraum DK2 wirkt somit gegen den im Torusraum des Drehmomentwandlers TC vorliegenden Druck. Die Fluidversorgung des zweiten Druckraums DK2 erfolgt über den zweiten Fluidkanal FK2, welcher durch die Nabe N abschnittsweise begrenzt wird.

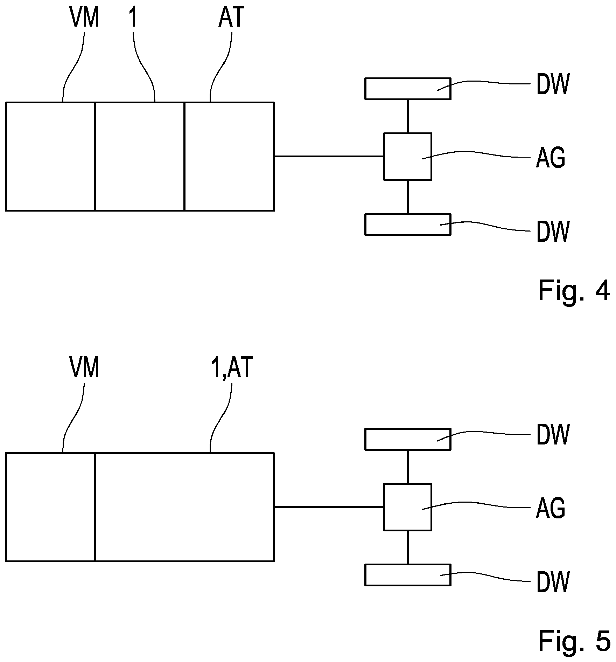

Fig. 4 zeigt einen Antriebsstrang eines Kraftfahrzeugs. Der Antriebsstrang weist einen Verbrennungsmotor VM, das Hybridantriebsmodul 1 sowie ein Getriebe AT auf. Hybridantriebsmodul 1 und Getriebe AT sind voneinander getrennte Einheiten mit zumindest einer Schnittstelle, über welche das Hybridantriebsmodul 1 und das Getriebe AT miteinander verbindbar sind. Eine Hydraulikversorgung des Hybridantriebsmoduls 1 erfolgt vorzugsweise über eine Hydraulik des Getriebes AT. Abtriebsseitig ist das Getriebe AT mit einem Differentialgetriebe AG verbunden, beispielsweise über eine Kardanwelle. Mittels dem Differentialgetriebe AG wird die an einer Abtriebswelle des Getriebes AT anliegende Leistung auf Antriebsräder DW des Kraftfahrzeugs verteilt.

Fig. 5 zeigt einen Antriebsstrang eines Kraftfahrzeugs, welcher im Wesentlichen dem in Fig. 4 dargestellten Antriebsstrang entspricht. Das Hybridantriebsmodul 1 und das Getriebe AT bilden nun eine gemeinsame Baueinheit. In anderen Worten ist das Hybridantriebsmodul 1 integraler Bestandteil des Getriebes AT.

Die in Fig. 4 und Fig. 5 dargestellten Antriebsstränge sind lediglich beispielhaft anzusehen. Statt dem dargestellten Aufbau mit längs zur Fahrtrichtung des Kraftfahrzeugs ausgerichtetem Antriebsstrang ist auch eine Verwendung in einem quer zur Fahrtrichtung ausgerichtetem Antriebsstrang denkbar. Das Differentialgetriebe AG kann in das Getriebe G integriert sein. Der Antriebsstrang mit dem Hybridantriebsmodul 1 ist auch für eine Allradanwendung geeignet.

### Bezugszeichen

- 1: Hybridantriebsmodul
- IN: Eingangswelle
- N: Nabe
- S: Stator
- R: Rotor
- K0: Trennkupplung
- K0K: Erster Kolben
- DK1: Erster Druckraum
- FK1: Erster Fluidkanal
- TC: Drehmomentwandler
- TCG: Gehäuse
- TCH: Hinterschnitt
- WK: Überbrückungskupplung
- WKK: Zweiter Kolben
- DK2: Zweiter Druckraum
- FK2: Zweiter Fluidkanal
- FK3: Dritter Fluidkanal
- VM: Verbrennungsmotor
- AT: Getriebe
- AG: Differentialgetriebe
- DW: Antriebsrad

## Patentansprüche

1. Hybridantriebsmodul (1) für ein Kraftfahrzeug, wobei das Hybridantriebsmodul (1) eine Eingangswelle (IN), eine elektrische Maschine mit einem drehfesten Stator (S) und einem drehbaren Rotor (R), eine Trennkupplung (K0) im Kraftfluss zwischen der Eingangswelle (IN) und dem Rotor (R) sowie einen Drehmomentwandler (TC) aufweist, dessen Gehäuse (TCG) mit dem Rotor (R) drehfest verbunden ist,
- wobei die Trennkupplung (K0) durch Druckbeaufschlagung eines ersten Druckraums (DK1) über einen ersten Kolben (KOK) in Schließrichtung betätigbar ist, wobei der erste Druckraum (DK1) außerhalb des Gehäuses (TCG) des Drehmomentwandlers (TC) angeordnet ist,
- wobei der Drehmomentwandler (TC) eine innerhalb des Gehäuses (TCG) des Drehmomentwandlers (TC) angeordnete Überbrückungskupplung (WK) aufweist, welche dazu eingerichtet ist einen hydrodynamischen Pfad des Drehmomentwandlers (WK) zu überbrücken,
- wobei die Überbrückungskupplung (WK) durch Druckbeaufschlagung eines zweiten Druckraums (DK2) über einen zweiten Kolben (WKK) in Schließrichtung betätigbar ist, wobei der zweite Druckraum (DK2) ausschließlich zur Betätigung der Überbrückungskupplung (WK) vorgesehen, und innerhalb des Gehäuses (TCG) des Drehmomentwandlers (TC) angeordnet ist,
wobei sowohl der erste Druckraum (DK1) als auch der zweite Druckraum (DK2) zumindest abschnittsweise durch das Gehäuse (TCG) des Drehmomentwandlers (TC) begrenzt sind, wobei das Gehäuse (TCG) des Drehmomentwandlers (TC) den ersten Druckraum (DK1) unmittelbar vom zweiten Druckraum (DK2) trennt, **dadurch gekennzeichnet, dass** die wirksame Fläche des ersten Kolbens (KOK) kleiner ist als die wirksame Fläche des zweiten Kolbens (WKK), wobei der erste Druckraum (DK1) und der zweite Druckraum (DK2) zumindest abschnittsweise radial übereinander angeordnet sind, und wobei der zweite Kolben (WKK) den ersten Druckraum (DK1) abschnittsweise umgreift.

2. Hybridantriebsmodul (1) nach Anspruch 1, **dadurch gekennzeichnet, dass** das Gehäuse (TCG) des Drehmomentwandlers (TC) einen Hinterschnitt (TCH) aufweist, welcher zur Führung des ersten Kolbens (KOK) dient.

3. Hybridantriebsmodul (1) nach einem der vorangehenden Ansprüche, **dadurch gekennzeichnet, dass** das Gehäuse (TCG) des Drehmomentwandlers (TC) mit einer Nabe (N) drehfest verbunden ist, welche einen ersten Fluidkanal (FK1) zur Fluidversorgung des ersten Druckraums (DK1) aufweist.

4. Hybridantriebsmodul (1) nach Anspruch 3, **dadurch gekennzeichnet, dass** die Nabe (N) einen zweiten Fluidkanal (FK2) zur Fluidversorgung des zweiten Druckraums (DK2) aufweist oder zumindest abschnittsweise begrenzt.

5. Hybridantriebsmodul (1) nach einem der vorangehenden Ansprüche, **dadurch gekennzeichnet, dass** die Trennkupplung (K0) und die Überbrückungskupplung (WK) als Lamellenkupplungen ausgebildet sind, wobei ein Außenlamellenträger der Trennkupplung (K0) drehfest mit dem Gehäuse (TCG) des Drehmomentwandlers (TC) verbunden ist.

6. Hybridantriebsmodul (1) nach Anspruch 5, **dadurch gekennzeichnet, dass** der Außenlamellenträger der Trennkupplung (K0) mit dem Gehäuse (TCG) des Drehmomentwandlers (TC) vernietet ist.

7. Hybridantriebsmodul (1) nach Anspruch 6, **dadurch gekennzeichnet, dass** die Nietverbindung zwischen dem Außenlamellenträger der Trennkupplung (K0) und des Gehäuses (TCG) des Drehmomentwandlers (TC) innerhalb des ersten Druckraums (DK1) angeordnet ist.

8. Hybridantriebsmodul (1) nach Anspruch 6 oder Anspruch 7, **dadurch gekennzeichnet, dass** die Nietverbindung zwischen dem Außenlamellenträger der Trennkupplung (K0) und des Gehäuses (TCG) des Drehmomentwandlers (TC) in einem Abschnitt des Gehäuses (TCG) angeordnet ist, welcher den zweiten Druckraum (DK2) begrenzt.

9. Hybridantriebsmodul (1) nach einem der vorangehenden Ansprüche, **dadurch gekennzeichnet, dass** das Hybridantriebsmodul (1) entweder integraler Bestandteil eines Kraftfahrzeug-Getriebes (AT) ist oder als eine eigenständige Einheit mit zumindest einer Schnittstelle zu dem Kraftfahrzeug-Getriebe (AT) ausgebildet ist.

10. Antriebsstrang für ein Kraftfahrzeug, **gekennzeichnet durch** ein Hybridantriebsmodul (1) nach einem der vorangehenden Ansprüche.

## Claims

1. Hybrid drive module (1) for a motor vehicle, wherein the hybrid drive module (1) has an input shaft (IN), an electric machine with a rotationally fixed stator (S) and a rotatable rotor (R), a separating clutch (K0) in the force flow between the input shaft (IN) and the rotor (R), and also a torque converter (TC), the housing (TCG) of which is connected in a rotationally fixed manner to the rotor (R),
- wherein the separating clutch (K0) can be actuated in the closing direction by applying pressure to a first pressure chamber (DK1) via a first piston (K0K), wherein the first pressure chamber (DK1) is arranged outside the housing (TCG) of the torque converter (TC),
- wherein the torque converter (TC) has a bridging clutch (WK) which is arranged inside the housing (TCG) of the torque converter (TC) and is designed to bridge a hydrodynamic path of the torque converter (TC),
- wherein the bridging clutch (WK) can be actuated in the closing direction by applying pressure to a second pressure chamber (DK2) by means of a second piston (WKK), wherein the second pressure chamber (DK2) is intended solely for actuating the bridging clutch (WK) and is arranged inside the housing (TCG) of the torque converter (TC),
wherein both the first pressure chamber (DK1) and the second pressure chamber (DK2) are delimited by the housing (TCG) of the torque converter (TC) at least in portions, wherein the housing (TCG) of the torque converter (TC) directly separates the first pressure chamber (DK1) from the second pressure chamber (DK2), **characterized in that** the effective area of the first piston (KOK) is smaller than the effective area of the second piston (WKK), wherein the first pressure chamber (DK1) and the second pressure chamber (DK2) are arranged radially one above the other at least in portions, and wherein the second piston (WKK) surrounds the first pressure chamber (DK1) in portions.

2. Hybrid drive module (1) according to Claim 1, **characterized in that** the housing (TCG) of the torque converter (TC) has an undercut (TCH) which serves to guide the first piston (K0K).

3. Hybrid drive module (1) according to either of the preceding claims, **characterized in that** the housing (TCG) of the torque converter (TC) is connected in a rotationally fixed manner to a hub (N) which has a first fluid duct (FK1) for supplying fluid to the first pressure chamber (DK1).

4. Hybrid drive module (1) according to Claim 3, **characterized in that** the hub (N) has a second fluid duct (FK2) for supplying fluid to the second pressure chamber (DK2) or delimits the second fluid duct at least in portions.

5. Hybrid drive module (1) according to any of the preceding claims, **characterized in that** the separating clutch (K0) and the bridging clutch (WK) are in the form of multi-plate clutches, wherein an outer plate carrier of the separating clutch (K0) is connected in a rotationally fixed manner to the housing (TCG) of the torque converter (TC).

6. Hybrid drive module (1) according to Claim 5, **characterized in that** the outer plate carrier of the separating clutch (K0) is riveted to the housing (TCG) of the torque converter (TC).

7. Hybrid drive module (1) according to Claim 6, **characterized in that** the rivet connection between the outer plate carrier of the separating clutch (K0) and the housing (TCG) of the torque converter (TC) is arranged inside the first pressure chamber (DK1).

8. Hybrid drive module (1) according to Claim 6 or Claim 7, **characterized in that** the rivet connection between the outer plate carrier of the separating clutch (K0) and the housing (TCG) of the torque converter (TC) is arranged in a portion of the housing (TCG) that delimits the second pressure chamber (DK2).

9. Hybrid drive module (1) according to any of the preceding claims, **characterized in that** the hybrid drive module (1) is either an integral constituent part of a motor vehicle transmission (AT) or is in the form of an independent unit with at least one interface to the motor vehicle transmission (AT).

10. Drive train for a motor vehicle, **characterized by** a hybrid drive module (1) according to any of the preceding claims.

## Revendications

1. Module d'entraînement hybride (1) pour un véhicule automobile, le module d'entraînement hybride (1) présentant un arbre d'entrée (IN), une machine électrique munie d'un stator (S) solidaire en rotation et d'un rotor (R) rotatif, un embrayage de séparation (K0) dans le flux de forces entre l'arbre d'entrée (IN) et le Rotor (R), ainsi qu'un convertisseur de couple (TC) dont le carter (TCG) est relié au rotor (R) de manière solidaire en rotation,
- dans lequel l'embrayage de séparation (K0) peut être actionné par mise sous pression d'une première chambre de pression (DK1) par l'intermédiaire d'un premier piston (KOK) dans le sens de fermeture, dans lequel la première chambre de pression (DK1) est disposée à l'extérieur du carter (TCG) du convertisseur de couple (TC),
- dans lequel le convertisseur de couple (TC) présente un embrayage en prise directe (WK) disposé à l'intérieur du carter (TCG) du convertisseur de couple (TC) et qui est aménagé pour ponter un chemin hydrodynamique du convertisseur de couple (TC),
- dans lequel l'embrayage en prise directe (WK) peut être actionné par mise sous pression d'une deuxième chambre de pression (DK2) par l'intermédiaire d'un deuxième piston (WKK) dans le sens de fermeture, dans lequel la deuxième chambre de pression (DK2) est prévue exclusivement pour actionner l'embrayage en prise directe (WK) et est disposée à l'intérieur du carter (TCG) du convertisseur de couple (TC),
dans lequel à la fois la première chambre de pression (DK1) et la deuxième chambre de pression (DK2) sont délimitées au moins par endroits par le carter (TCG) du convertisseur de couple (TC), dans lequel le carter (TCG) du convertisseur de couple (TC) sépare la première chambre de pression (DK1) directement de la deuxième chambre de pression (DK2), **caractérisé en ce que** la surface active du premier piston (KOK) est inférieure à la surface active du deuxième piston (WKK), dans lequel la première chambre de pression (DK1) et la deuxième chambre de pression (DK2) sont disposées au moins par endroits radialement l'une au-dessus de l'autre, et dans lequel le deuxième piston (WKK) entoure la première chambre de pression (DK1) par endroits.

2. Module d'entraînement hybride (1) selon la revendication 1, **caractérisé en ce que** le carter (TCG) du convertisseur de couple (TC) présente une contre-dépouille (TCH) qui sert à guider le premier piston (KOK).

3. Module d'entraînement hybride (1) selon l'une quelconque des revendications précédentes, **caractérisé en ce que** le carter (TCG) du convertisseur de couple (TC) est relié de manière solidaire en rotation à un moyeu (N) qui présente un premier canal de fluide (FK1) pour l'alimentation en fluide de la première chambre de pression (DK1).

4. Module d'entraînement hybride (1) selon la revendication 3, **caractérisé en ce que** le moyeu (N) présente un deuxième canal de fluide (FK2) pour l'alimentation en fluide de la deuxième chambre de pression (DK2) ou qui la délimite au moins par endroits.

5. Module d'entraînement hybride (1) selon l'une quelconque des revendications précédentes, **caractérisé en ce que** l'embrayage de séparation (K0) et l'embrayage en prise directe (WK) sont réalisés sous forme d'embrayage à disques multiples, dans lequel un support de disques extérieurs de l'embrayage de séparation (K0) est relié de manière solidaire en rotation au carter (TCG) du convertisseur de couple (TC).

6. Module d'entraînement hybride (1) selon la revendication 5, **caractérisé en ce que** le support de disques extérieurs de l'embrayage de séparation (K0) est riveté avec le carter (TCG) du convertisseur de couple (TC).

7. Module d'entraînement hybride (1) selon la revendication 6, **caractérisé en ce que** l'assemblage riveté entre le support de disques extérieurs de l'embrayage de séparation (K0) et du carter (TCG) du convertisseur de couple (TC) est disposé à l'intérieur de la première chambre de pression (DK1).

8. Module d'entraînement hybride (1) selon la revendication 6 ou la revendication 7, **caractérisé en ce que** l'assemblage riveté est disposé entre le support de disques extérieurs de l'embrayage de séparation (K0) et le carter (TCG) du convertisseur de couple (TC) dans une partie du carter (TCG) qui délimite la deuxième chambre de pression (DK2).

9. Module d'entraînement hybride (1) selon l'une quelconque des revendications précédentes, **caractérisé en ce que** le module d'entraînement hybride (1) soit fait partie intégrante d'une transmission de véhicule automobile (AT), soit est réalisé sous la forme d'une unité autonome comprenant au moins une interface avec la transmission de véhicule automobile (AT).

10. Chaîne cinématique pour un véhicule automobile, **caractérisée par** un module d'entraînement hybride (1) selon l'une quelconque des revendications précédentes.
